(19) **Europäisches Patentamt / European Patent Office / Office européen des brevets**

(11) **EP 4 752 977 A1**

(12) **EUROPEAN PATENT APPLICATION**

(43) Date of publication:
03.06.2026   Bulletin 2026/23

(21) Application number: 25216956.0

(22) Date of filing: 19.11.2025

(51) International Patent Classification (IPC):
$H01M\ 4/58$ (2010.01)    $H01M\ 10/04$ (2006.01)
$H01M\ 10/052$ (2010.01)    $H01M\ 10/0587$ (2010.01)
$H01M\ 50/107$ (2021.01)

(52) Cooperative Patent Classification (CPC):
**H01M 4/5825; H01M 10/0431; H01M 10/052;
H01M 10/0587; H01M 50/107;** Y02E 60/10;
Y02P 70/50

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  28.11.2024  CN 202422922934 U

(71) Applicant: **AESC Japan Ltd.**
**Yokohama-shi, Kanagawa 220-0012 (JP)**

(72) Inventor: **ZHANG, Long**
**Jiangyin City, Wuxi City, Jiangsu Province
214443 (CN)**

(74) Representative: **Becker, Eberhard**
**Becker Kurig & Partner**
**Patentanwälte mbB**
**Bavariastraße 7**
**80336 München (DE)**

(54) **SECONDARY BATTERY, BATTERY PACK, AND ELECTRONIC DEVICE**

(57)     A secondary battery (1), a battery pack (100), and an electronic device (1000) are provided. The secondary battery (1) includes a housing (10, 30); an electrode assembly (20) accommodated in the housing (10, 30), in which the electrode assembly (20) is formed by stacking a first electrode (21), a separator (22), and a second electrode (23); the first electrode (21) includes a first current collector (211), and a partial area of at least one surface of the first current collector (211) is covered with a conductive layer (212) and an insulation layer (213) along a preset direction; the conductive layer (212) is covered with a first active material layer (214), and the first active material layer (214) at least partially covers the insulation layer (213); setting that a thickness of the conductive layer (212) is m, and a thickness of the insulation layer (213) is n, then n≤m.

FIG. 5

EP 4 752 977 A1

**Description**

BACKGROUND

Technical Field

The disclosure relates to a field of a secondary battery, and more particularly, to a secondary battery, a battery pack, and an electronic device.

Description of Related Art

In recent years, with rapid development of electric vehicles, consumer electronics, and new energy storage systems, for the electric vehicles, battery technology has become an important factor in the development thereof.

In the development of the battery technology, how to improve battery safety and reduce battery costs is a technical issue that is required to be solved urgently.

SUMMARY

A technical issue to be solved in the disclosure is to provide a secondary battery, a battery pack, and an electronic device to overcome the above technical issues of the related art.

In the disclosure, the above technical issues are solved by the following technical solutions:

A secondary battery includes:
A housing;
An electrode assembly accommodated in the housing, in which the electrode assembly is formed by stacking a first electrode, a separator, and a second electrode, the first electrode includes a first current collector, a partial area of at least one surface of the first current collector is covered with a conductive layer and an insulation layer along a preset direction, and the preset direction is a length direction or a width direction of the first current collector;
Furthermore, the conductive layer is covered with a first active material layer, the first active material layer at least partially covers the insulation layer, and an orthographic projection of the insulation layer in a thickness direction of the first current collector is at least partially located outside an outer periphery of the first active material layer;
Setting that a thickness of the conductive layer is m, and a thickness of the insulation layer is n, then $n \leq m$.

In this technical solution, by setting the partial area of the at least one surface of the first current collector to be covered with the conductive layer and the insulation layer along the preset direction, the conductive layer is covered with the first active material layer, and the first active material layer at least partially covers the insulation layer. That is, the conductive layer and the insulation layer are coated on the first current collector before the first active material layer is coated. By pre-coating the conductive layer and the insulation layer, edges of the first active material layer and the insulation layer may be made clear. This is because the first active material layer and the insulation layer are generally applied by extrusion coating, the thickness of the insulation layer is uncontrollable and is generally between 15 μm and 30 μm, resulting in the unclear edges of the first active material layer and the insulation layer. In this embodiment, by pre-coating the conductive layer and the insulation layer, the unclear edges caused by the extrusion coating of the first active material layer and the insulation layer at the same time are avoided, and generation of a fusion area between the two is effectively avoid. That is, the edge of the first active material layer is guaranteed to be straight, so that after lamination or winding, CCD may accurately identify the edge of the first active material layer, facilitate accurate identification of spacings between edges of the first active material layer, the separator, and a second active material layer of the second electrode, and control the spacing between the electrode and the separator (the spacing between the edge of the first active material layer of the first electrode and the edge of the separator, and the spacing between the edge of the first active material layer and the edge of the second active material layer of the second electrode), which ensures consistency of the electrode assembly and greatly improves a yield rate. Furthermore, before the first electrode is wound or laminated to prepare the electrode assembly, in order to improve the takt time and site utilization, the first current collector is often pre-stored as a large roll (referred to as a pole roll) before the first active material layer is coated. At this time, if m is less than n, that is, the thickness of the conductive layer is less than the thickness of the insulation layer, hardness of an area where the insulation layer is disposed in the pole roll is greater than that of an area where the conductive layer is disposed, which will cause the edge where the insulation layer is located to warp, so that a radial direction of an edge of the pole roll becomes increasingly inclined from a center to a periphery, resulting in diameter differences of the pole roll at positions corresponding to the conductive layer and the insulation layer of the pole roll to become increasingly greater, which may easily cause the first current collector to be torn, posing a safety hazard. By setting the thickness m of the conductive layer to be greater than or equal to the thickness n of the insulation layer, the radial direction of the edge of the pole roll may be kept in a relatively flat position from the center to the periphery, effectively avoiding the edge where the insulation layer is located from warping, so that the diameter differences of the pole roll at the positions corresponding to the conductive layer and the insulation layer of the pole roll are relatively close, which is not easy to cause the first current collector to be torn, reducing the safety hazard, and that when the first current collector is used to be coated into the first electrode, and when the first electrode and the separator is wound or laminated, the yield rate of the winding and laminating the electrode assembly may be greatly improved. At the same time, controlling the thickness of the insulation layer and reducing material consumption also effectively lower production costs.

Preferably, 0.5 $\mu$m≤m< 1 $\mu$m.

Preferably, the insulation layer includes an inorganic insulating filler and a binder, and based on mass of the insulation layer, mass of the inorganic insulating filler accounts for 70% to 90%, and mass of the binder accounts for 10% to 30%;

Setting that a particle size corresponding to a volume percentage of cumulative particle size distribution of the inorganic insulating filler reaching 50% is D50, a relationship between D50 of the inorganic insulating filler and n satisfies: 2≤n /D50≤5; and/or
Setting that the particle size corresponding to the volume percentage of cumulative particle size distribution of the inorganic insulating filler reaching 90% is D90, D90 of the inorganic insulating filler is less than 0.8 $\mu$m.

Preferably, along the preset direction, the insulation layer includes a first area not covered by the first active material layer and a second area covered by the first active material layer, a width of the first area is w1, and a width of the second area is w2;
Where 3mm≤w1+w2≤20mm, or

$$0.1≤w1/(w1+w2)≤1.$$

Preferably, along the preset direction, the first active material layer includes a straight area and a thinned area connected to each other, and a width of the thinned area is w3;
Where 0 < w2/w3≤1.05.

Preferably, along the preset direction, a minimum spacing between the insulation layer and the conductive layer is w4, where 0≤w4≤1 mm.

Preferably, the first electrode is a positive electrode, and the first active material layer includes lithium iron phosphate; and/or
The secondary battery further includes a cover assembly, the cover assembly is disposed on the housing and defines an accommodating cavity together with the housing, and the electrode assembly is accommodated in the accommodating cavity; and/or
The secondary battery is a prismatic battery; and/or the electrode assembly is a wound electrode assembly.

Preferably, the housing includes a surrounding side wall and an opening formed at one end of the side wall; the housing further comprises a crimping portion, and the crimping portion is formed at one end of the side wall close to the opening and recessed toward an interior of the housing;

The secondary battery further includes:

A cover mounted on the opening;
An insulative sealing member, in which the insulative sealing member is disposed around a periphery of the cover to insulate and seal the cover and the housing;
A current collecting plate disposed between the electrode assembly and the cover and electrically connected to the housing, in which a connecting sheet of the current collecting plate is located on one side of the crimping portion facing the electrode assembly and is welded and connected to the crimping portion;
And/or
The secondary battery is a cylindrical battery.

A battery pack includes the secondary battery described above.

An electronic device includes the battery pack described above.

A positive improved effect of the disclosure is: In the disclosure, by setting the partial area of the at least one surface of the first current collector to be covered with the conductive layer and the insulation layer sequentially, the conductive layer is covered with the first active material layer, and the first active material layer at least partially covers the insulation layer. That is, by pre-coating the conductive layer and the insulation layer, the costs may be reduced, and the edges of the first active material layer and the insulation layer are made clear, effectively avoiding the generation of the fusion area between the two. That is, the edge of the first active material layer is guaranteed to be straight, so that after lamination or winding, CCD may accurately identify the edge of the first active material layer, and facilitate the accurate identification of the spacings between the edges of the first active material layer, the separator, and the second active material layer of the second electrode, which ensures the consistency of the electrode assembly and greatly improves the yield rate. Furthermore, by setting the thickness m of the conductive layer to be greater than or equal to the thickness n of the insulation layer, the radial direction of the edge of the pole roll may be kept in the relatively flat position from the center to the periphery, effectively avoiding the edge where the insulation layer is located from warping, so that the diameter differences of the pole roll at the positions corresponding to the conductive layer and the insulation layer of the pole roll are relatively close, which is not easy to cause the first current collector to be torn, reducing the safety hazard, and that when the first current collector is used to be coated into the first electrode, and when the first electrode and the separator is wound or laminated, the yield rate of the winding and laminating the electrode assembly may be greatly improved. At the same time, controlling the thickness of the insulation layer and reducing material consumption also effectively lower the production costs.

## BRIEF DESCRIPTION OF THE DRAWINGS

FIG. 1 is a schematic exploded perspective view of a structure of a secondary battery according to a preferred embodiment of the disclosure.

FIG. 2 is a schematic partial perspective view of a structure of a secondary battery according to a preferred embodiment of the disclosure.

FIG. 3 is a schematic partial cross-sectional view of a structure of an electrode assembly of a secondary battery according to a preferred embodiment of the disclosure.

FIG. 4 is a schematic partial cross-sectional view of an implementation of a structure of a first electrode of a secondary battery according to a preferred embodiment of the disclosure.

FIG. 5 is a schematic partial enlarged view of a structure of a portion A in FIG. 4.

FIG. 6 is a schematic partial cross-sectional view of another implementation of a structure of a first electrode of a secondary battery according to a preferred embodiment of the disclosure.

FIG. 7 is a schematic partial enlarged view of a structure of a portion B in FIG. 6.

FIG. 8 is a schematic cross-sectional view of another implementation of a structure of a secondary battery according to a preferred embodiment of the disclosure.

FIG. 9 is a schematic partial enlarged view of a structure of a portion C in FIG. 8.

FIG. 10 is a schematic view of a structure of a battery pack according to a preferred embodiment of the disclosure.

FIG. 11 is a schematic view of a structure of an electronic device according to a preferred embodiment of the disclosure.

## DETAILED DESCRIPTION OF DISCLOSED EMBODIMENTS

A preferred embodiment is given below, and the disclosure is described more clearly and completely with reference to the accompanying drawings.

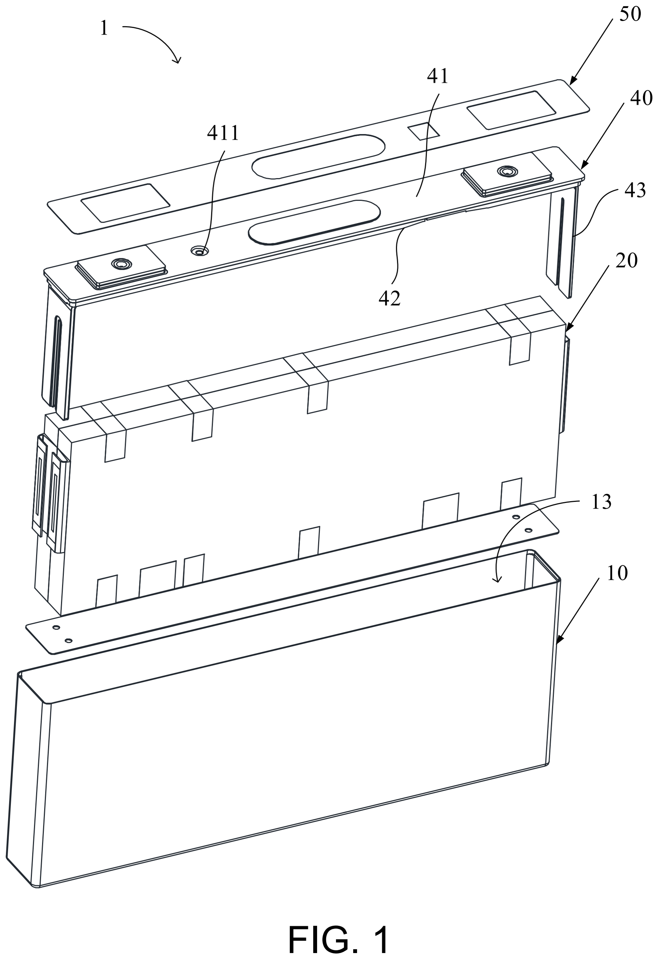

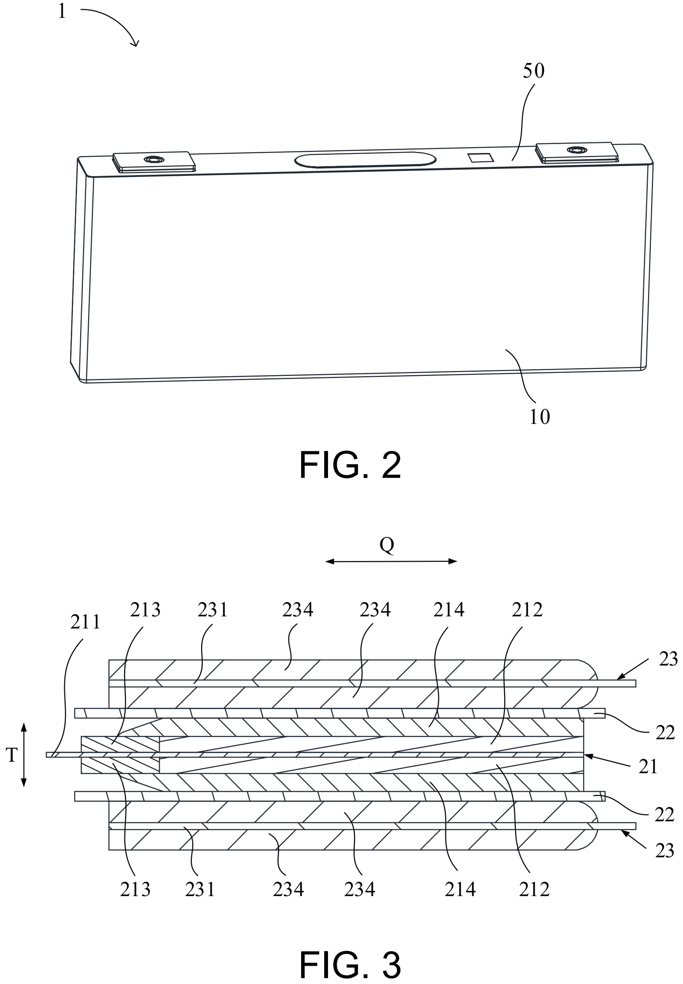

As shown in FIGs. 1 and 2, in this embodiment, a secondary battery 1 is provided. The secondary battery 1 includes a housing 10 and an electrode assembly 20. The electrode assembly 20 is accommodated in the housing 10.

As shown in FIGs. 3 to 5, the electrode assembly 20 is formed by stacking a first electrode 21, a separator 22, and a second electrode 23 (the stacking includes winding after stacking to form a wound electrode assembly or laminating after stacking to form a laminated electrode assembly). The first electrode 21 includes a first current collector 211. Along a preset direction Q, a partial area of at least one surface of the first current collector 211 is covered with a conductive layer 212 and an insulation layer 213. The preset direction Q is a length direction or a width direction of the first current collector 211.

The conductive layer 212 is covered with a first active material layer 214, and the first active material layer 214 at least partially covers the insulation layer 213. Along a thickness direction T of the first current collector 211, an orthographic projection of the insulation layer 213 is at least partially located outside an outer periphery of the first active material layer 214. Setting that a thickness of the conductive layer 212 is m, and a thickness of the insulation layer 213 is n, then $n \leq m$.

In this way, by setting the partial area of the at least one surface of the first current collector 211 to be covered with the conductive layer 212 and the insulation layer 213 along the preset direction Q, the conductive layer 212 is covered with the first active material layer 214, and the first active material layer 214 at least partially covers the insulation layer 213. That is, the conductive layer 212 and the insulation layer 213 are coated on the first current collector 211 before the first active material layer 214 is coated. By pre-coating the conductive layer 212 and the insulation layer 213, edges of the first active material layer 214 and the insulation layer 213 may be made clear. This is because the first active material layer 214 and the insulation layer 213 are generally applied by extrusion coating (a slurry is extruded and coated through a gasket), the thickness of the insulation layer 213 is uncontrollable and is generally between 15 $\mu$m and 30 $\mu$m, resulting in the unclear edges of the first active material layer 214 and the insulation layer 213. In this embodiment, by pre-coating the conductive layer 212 and the insulation layer 213, the unclear edges caused by the extrusion coating of the first active material layer 214 and the insulation layer 213 at the same time are avoided, and generation of a fusion area between the two is effectively avoid. That is, the edge of the first active material layer 214 is guaranteed to be straight, so that after lamination or winding, CCD may accurately identify the edge of the first active material layer 214, facilitate accurate identification of spacings between edges of the first active material layer 214, the separator 22, and a second active material layer 234 of the second electrode 23, and control the spacing between the electrode and the separator (the spacing between the edge of the first active material layer 214 of the first electrode 21 and the edge of the separator 22, and the spacing between the edge of the first active material layer 214 and the edge of the second active material layer 234 of the second electrode 23), which ensures consistency of the electrode assembly 20 and greatly improves a yield rate. Furthermore, before the first electrode 21 is wound or laminated to prepare the electrode assembly 20, in order to improve the takt time and site utilization, the first current collector 211 is often pre-stored as a large roll (referred to as a pole roll) before the first active material layer 214 is coated. At this time, if m is less than n, that is, the thickness of the conductive layer 212 is less than the thickness of the insulation layer 213, hardness of an area where the insulation layer 213 is disposed in the pole roll is greater than that of an area where the conductive layer 212 is disposed, which will cause the edge where the insulation layer 213 is located to warp, so that a radial direction of an edge of the pole roll becomes increasingly inclined from a center to a periphery, resulting in diameter differences of the pole roll at positions corresponding to the conductive layer 212 and the insulation layer 213 of the pole roll to become increasingly greater, which may easily cause the first current collector 211 to be torn, posing a safety hazard. In this embodiment, by setting the thickness m of the conductive layer 212 to be greater than or equal to the thickness n of the insulation layer 213, the radial direction of the edge of the pole roll may be kept in a relatively flat position from the center to the periphery, effectively avoiding the edge where the insulation layer 213 is located from warping, so that the diameter differences of the pole roll at the positions corresponding to the conductive layer 212 and the insulation layer 213 of the pole roll are relatively close, which is not easy to cause the first current collector 211 to be torn, reducing the safety hazard, and that when the first current collector 211 is used to be coated into the first electrode 21, and when the first electrode 21 and the separator 22 is wound or laminated, the yield rate of the winding and laminating the electrode assembly 20 may be greatly improved. At the same time, controlling the thickness of the insulation layer 213 and reducing material consumption also effectively lower production costs.

It should be noted that the conductive layer and the insulation layer are pre-coated on the first current collector, and the pre-coating includes, but is not limited to, gravure coating of the conductive layer and the insulation layer.

Specifically, in this embodiment, along the preset direction Q, the partial areas on the two surfaces of the first current collector 211 facing back to back with each other along the thickness direction T are sequentially covered with the conductive layer 212 and the insulation layer 213, and the conductive layer 212 and the insulation layer 213 on the two surfaces are covered with the first active material layer 214. Layer structures on the two surfaces of the first current collector 211 facing back to back with each other along the thickness direction T are symmetrically disposed with respect to the first current collector 211. However, the disclosure is not limited thereto. In other embodiments, the partial area on one of the surfaces of the first current collector 211 along the preset direction Q may be covered with the conductive layer 212 and the insulation layer 213, and the conductive layer 212 and the insulation layer 213 on the surface may be covered with the first active material layer 214.

The second electrode 23 includes a second current collector 231. Partial areas on two surfaces of the second current collector 231 facing back to back with each other along the thickness direction T are covered with the second active material layer 234. The two second active material layers 234 are symmetrically disposed with respect to the second current collector 231. However, the disclosure is not limited thereto. In other embodiments, the partial area of one of the surfaces of the second current collector 231 may be covered with the second active material layer 234.

In this embodiment, $0.5\ \mu m \leq m < 1\ \mu m$, which may be, for example, $0.5\ \mu m$, $0.6\ \mu m$, $0.75\ \mu m$, $0.8\ \mu m$, $0.99\ \mu m$, etc. Alternatively, $0.5\ \mu m < n < 1\ \mu m$, which may be, for example, $0.55\ \mu m$, $0.6\ \mu m$, $0.75\ \mu m$, $0.8\ \mu m$, or $0.99\ \mu m$. In this way, by controlling a value range of the thickness m of the conductive layer 212, on the one hand, the thickness m of the conductive layer 212 is avoided from being too small, which will not improve conductivity of the first current collector 211; on the other hand, the thickness m of the conductive layer 212 is avoided from being too large, which will cause overall volume of the electrode assembly 20 to be too large, thereby affecting overall energy density. By controlling the thickness n of the insulation layer 213, on the one hand, the thickness n of the insulation layer 213 is avoided from being too small, thereby failing to provide an insulation effect; on the other hand, the thickness n of the insulation layer 213 is avoided from being too large, thereby affecting flexibility of the insulation layer 213. It should be noted that the pre-coating method, which is not limited to gravure coating, may achieve the thicknesses of the conductive layer and the insulation layer of less than or equal to 1 μm, while the coating formed by the extrusion coating method is thicker, with a minimum thickness of about 10 μm.

The insulation layer 213 includes an inorganic insulating filler and a binder. Based on mass of the insulation layer 213, mass of the inorganic insulating filler accounts for 70% to 90%, and mass of the binder accounts for 10% to 30%.

Preferably, setting that a particle size corresponding to a volume percentage of cumulative particle size distribution of the inorganic insulating filler reaching 50% is D50, and a unit of D50 is μm, a relationship between D50 of the inorganic insulating filler and n satisfies: $2 \leq n/D50 \leq 5$, which may be, for example, 2, 2.9, 3, 3.5, 4.9, 5, etc. As mentioned above, it is necessary to adopt the pre-coating method, which is not limited to the gravure coating, to achieve the control of $0.5\ \mu m \leq m < 1\ \mu m$ or $0.5\ \mu m < n < 1\ \mu m$. On this basis, the relationship between D50 of the inorganic insulating filler and n is limited to satisfy: $2 \leq n/D50 \leq 5$, which may effectively achieve the coating that satisfies the thickness range of the aforementioned insulation layer 213, thereby effectively controlling the thickness of the insulation layer 213, and may enable the radial direction of the edge of the pole roll as mentioned above to be kept in the relatively flat position from the center to the periphery, effectively avoiding the edge of the insulation layer 213 from warping. As a result, the diameter differences of the pole roll at the positions corresponding to the conductive layer 212 and the insulation layer 213 of the pole roll are relatively close, which is not easy to cause the first current collector 211 to be torn, reducing the safety hazard, and thus when the first current collector 211 is used to be coated into the first electrode 21, and when the first electrode 21 and the separator 22 is wound or laminated, the yield rate of the winding and laminating the electrode assembly 20 may be greatly improved.

Preferably, setting that the particle size corresponding to the volume percentage of cumulative particle size distribution of the inorganic insulating filler reaching 90% is D90, and a unit of D90 is $\mu$m, D90 of the inorganic insulating filler is less than 0.8 $\mu$m. As mentioned above, it is necessary to adopt the pre-coating method, which is not limited to the gravure coating, to achieve the control of 0.5 $\mu$m$\leq$m < 1 $\mu$m or 0.5 $\mu$m < n < 1$\mu$m. On this basis, D90 of the inorganic insulating filler is limited to less than 0.8 $\mu$m, which may effectively achieve the coating that satisfies the thickness range of the aforementioned insulation layer 213, thereby effectively controlling the thickness of the insulation layer 213, and may enable the radial direction of the edge of the pole roll as mentioned above to be kept in the relatively flat position from the center to the periphery, effectively avoiding the edge of the insulation layer 213 from warping. As a result, the diameter differences of the pole roll at the positions corresponding to the conductive layer 212 and the insulation layer 213 of the pole roll are relatively close, which is not easy to cause the first current collector 211 to be torn, reducing the safety hazard, and thus when the first current collector 211 is used to be coated into the first electrode 21, and when the first electrode 21 and the separator 22 is wound or laminated, the yield rate of the winding and laminating the electrode assembly 20 may be greatly improved,

Along the preset direction Q, the insulation layer 213 includes a first area 2131 not covered by the first active material layer 214 and a second area 2132 covered by the first active material layer 214. A width of the first area 2131 is w1, and a width of the second area 2132 is w2, where 3 mm$\leq$ w1+w2$\leq$20 mm, which may be, for example, 3 mm, 5 mm, 7 mm, 10 mm, 14 mm, 20 mm, etc., or, 0.1$\leq$ w1/(w1+w2)$\leq$1, which may be, for example, 0.1, 0.4, 0.5, 0.75, 0.9, 1, etc. In this way, by setting a value range of a width of the insulation layer 213, the flexibility of the insulation layer 213 may be effectively guaranteed. By setting a ratio range of the width of the first area 2131 and the width of the insulation layer 213, it may ensure that the first area 2131 always extends beyond the edge of the first active material layer 214 by a certain width along the preset direction Q, so that the flexibility of the insulation layer 213 may be guaranteed while guaranteeing that the insulation layer 213 has an insulating function, and when the insulation layer 213 is coated widely, a tab of the first electrode 21 may still be bent normally. Furthermore, in a harsh environment, such as when the tab is inserted upside down, the tab of the first electrode 21 will also not be in direct contact with the second electrode 23. A unit of w1 is $\mu$m.

Along the preset direction Q, the first active material layer 214 includes a straight area 2141 and a thinned area 2142 connected to each other. A width of the thinned area 2142 is w3, and a unit of w3 is mm, where 0 < w2/w3$\leq$1.05, which may be, for example, 0.1, 0.4, 0.5, 0.75, 0.9, 1, 1.05, etc. In this way, by setting a value range of a ratio of the width w2 of the second area 2132 of the insulation layer 213 to the width w3 of the thinned area 2142 of the first active material layer 214, the second area 2132 of the insulation layer 213 covered by the first active material layer 214 will not overlap the straight area 2141 of the first active material layer 214 as much as possible, thereby avoiding affecting the overall energy density. Preferably, 0 < w2/w3$\leq$1. Units of w3 and w4 are both $\mu$m.

Along the preset direction Q, a minimum spacing between the insulation layer 213 and the conductive layer 212 is w4, where 0$\leq$w4$\leq$1 mm, which may be, for example, 0, 0.4 mm, 0.5 mm, 0.75 mm, 0.9 mm, 1 mm, etc. By controlling the minimum spacing w4, the insulation layer 213 is prevented from occupying too much space and affecting an area where the tab is located, thereby avoiding affecting the energy density of the battery. A bottom of the first active material layer 214 may also be reasonably allowed to be in contact with the conductive layer 212 as much as possible to improve the conductivity. At the same time, because w4 is reserved in an appropriate range, quality of the pre-coating of the insulation layer 213 and the conductive layer 212 may be controlled.

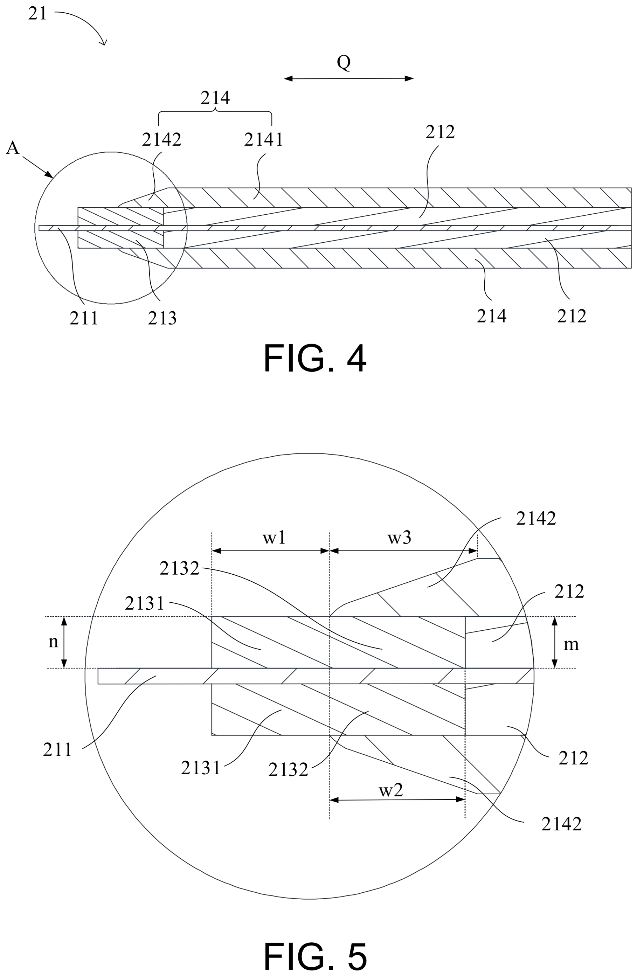

Referring to FIGs. 4 and 5 again, in an implementation of this embodiment, the minimum spacing w4 between the insulation layer 213 and the conductive layer 212 is 0. That is, an edge of the insulation layer 213 is closely attached to an edge of the conductive layer 212, so that the insulation layer 213 occupies the least space and avoids affecting the area where the tab is located to the greatest extent.

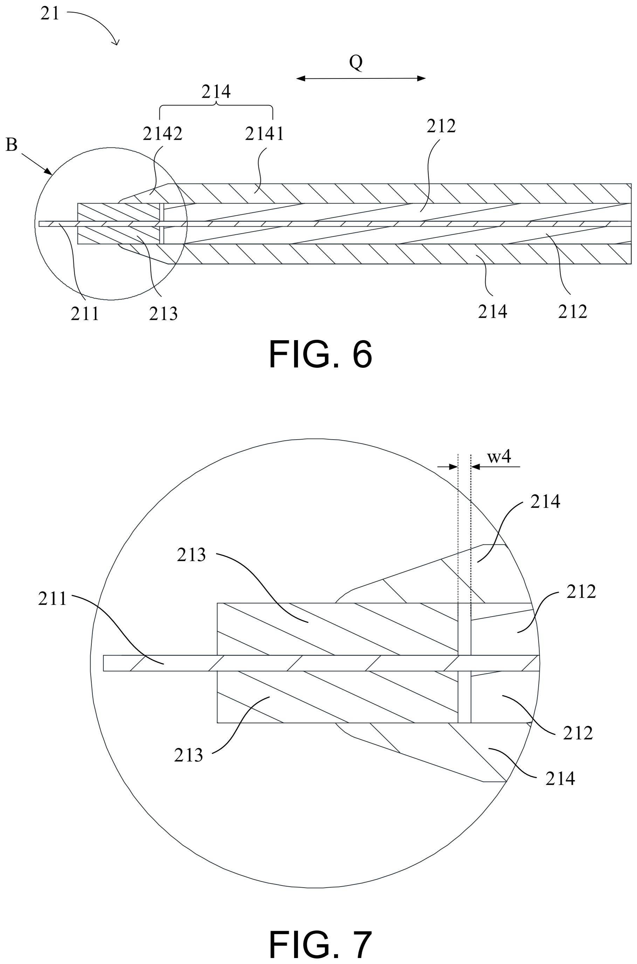

Preferably, as shown in FIGs. 6 and 7, in an implementation of this embodiment, the minimum spacing w4 between the edge of the insulation layer 213 and the conductive layer 212 is 1 mm. The unit of w4 is $\mu$m. That is to say, the edges of the insulation layer 213 and the conductive layer 212 are disposed at intervals, and a portion of the first current collector 211 is exposed. Since a color of the first current collector 211 is quite different from a color of the conductive layer 212, by disposing the insulation layer 213 and the conductive layer 212 at intervals, the edge of the conductive layer 212 may be easily grasped. In addition, the insulation layer 213 and the conductive layer 212 are disposed at intervals to make the edges of the two smoother.

In this embodiment, the first electrode 21 is a positive electrode, and the second electrode 23 is a negative electrode. However, the disclosure is not limited thereto. Since a material of a metal portion of the positive electrode is generally aluminum, and a material of a metal portion of the negative electrode is generally copper, hardness of the metal portion of the positive electrode is higher than hardness of the metal portion of the negative electrode. The insulation layer 213 is disposed on the positive electrode, which may reduce a risk of deformation of the positive electrode and improve insulation performance of the positive electrode, thereby greatly improving safety and reliability of battery performance. In other embodiments, the second electrode 23 may be a positive electrode, and the first electrode 21 may be a negative electrode.

The first active material layer 214 is a positive active material layer, and the first active material layer 214 includes lithium iron phosphate. When a positive active material is lithium iron phosphate, the first active material layer 214 and the insulation layer 213 are coated at the same time, which are more likely to be fused, resulting in the unclear edges. By pre-coating the conductive layer 212 and the insulation layer 213, an issue of the unclear edges of the first active material layer 214 and the insulation layer 213, whose electrode active materials are lithium iron phosphate, may be better improved.

The electrode assembly 20 is a wound electrode assembly, or the electrode assembly 20 is a laminated electrode assembly.

Referring to FIGs. 1 and 2 again, in an implementation of this embodiment, the secondary battery 1 is a prismatic battery. However, the disclosure is not limited thereto. In other embodiments, the secondary battery 1 may also be a battery in other shapes such as a cylindrical battery.

A specific structure of the insulation layer 213 in this embodiment is applied to the prismatic battery. By pre-coating the conductive layer 212 and the insulation layer 213, the edges of the first active material layer 214 and the insulation layer 213 may be made clear, effectively avoiding the generation of the fusion area between the two, facilitating the accurate identification of the edge of the first active material layer 214, ensuring the consistency of the electrode assembly 20, and greatly improving the yield rate. Furthermore, by setting the thickness m of the conductive layer 212 to be greater than or equal to the thickness n of the insulation layer 213, where the units of m and n are $\mu$m, the edge where the insulation layer 213 is located may be effectively prevented from warping, thereby greatly improving the yield rate. At the same time, controlling the thickness of the insulation layer 213 and reducing the material consumption also effectively lower the production costs. Furthermore, since the tab of the first electrode 21 and a tab of the second electrode 23 of the prismatic battery are led out on the same side, insulation of the tab of the first electrode 21 and the tab of the second electrode 23 may be better achieved by controlling the coating thickness of the insulation layer 213.

The secondary battery 1 further includes a cover assembly 40. The cover assembly 40 is disposed on the housing 10 and defines an accommodating cavity 13 together with the housing 10. The electrode assembly 20 is accommodated in the accommodating cavity 13. The cover assembly 40 includes a cover body 41 and an insulation member 42. The cover body 41 is provided with a liquid injection hole 411 penetrating through the cover body 41 along the thickness direction of the cover body 41. The insulation member 42 is located between the cover body 41 and the electrode assembly 20.

The cover assembly 40 further includes an electrode terminal 43. One end of the electrode terminal 43 is electrically connected to the tab led out by the electrode assembly 20, and the other end is sequentially passed through a first electrode lead-out hole on the insulation member 42 and a second electrode lead-out hole on the cover body 41. The tab led out by the first electrode 21 is a first tab, and the tab led out by the second electrode 23 is a second tab. The first tab and the second tab are electrically connected to the corresponding electrode terminals 43 respectively.

The secondary battery 1 further includes a top cover 50 that covers the cover assembly 40.

By setting the thickness of the conductive layer in the prismatic battery to m and the thickness of the insulation layer to n, where n≤m, and the units of m and n are both $\mu$m, because the tabs of the prismatic battery are required to be bent when the tabs are directly connected to the adapter sheet or a pole post, strength of the tabs may be enhanced, and a phenomenon of tab insertion may be reduced by 3mm≤w1 w2≤20mm.

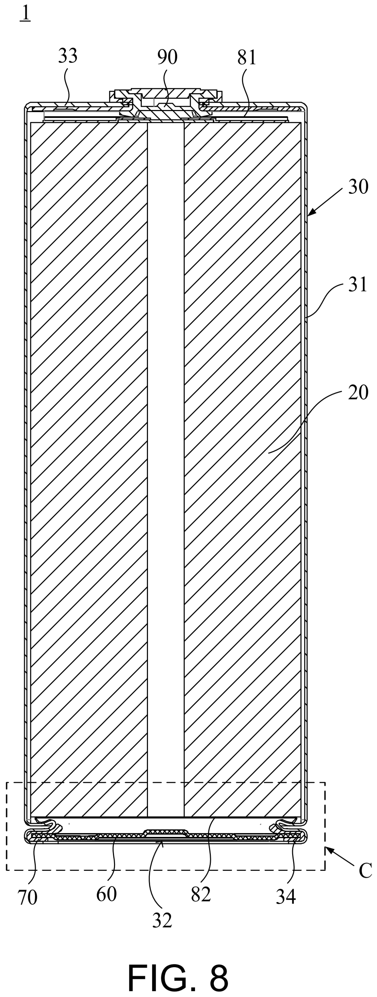

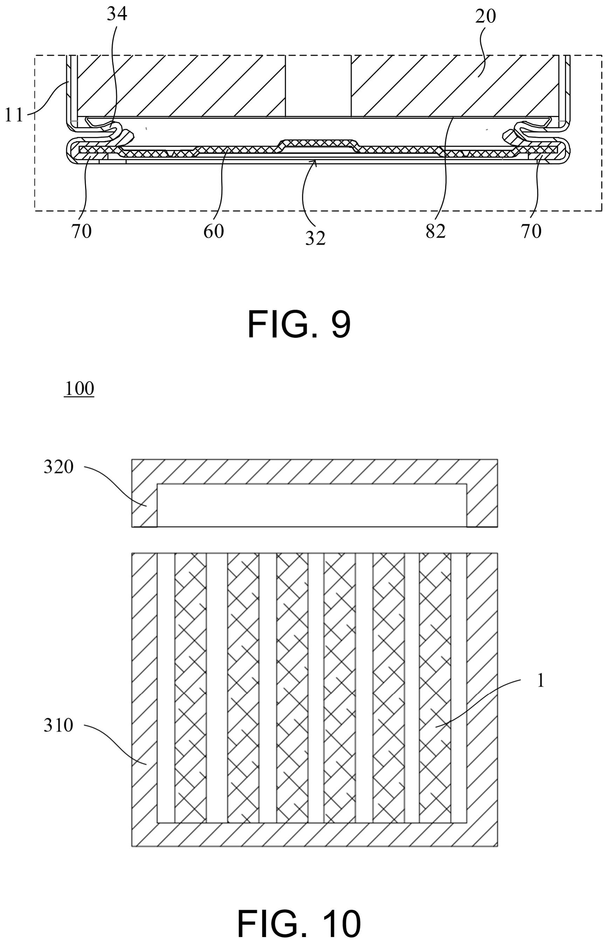

As shown in FIGs. 8 and 9, in another implementation of this embodiment, the secondary battery 1 is a cylindrical battery. The cylindrical battery has advantages such as high energy density, long cycle life, and good safety performance. However, the disclosure is not limited thereto. In other embodiments, the secondary battery 1 may also be a battery in other shapes such as a prismatic battery. A housing 30 of the cylindrical battery is cylindrical.

The specific structure of the insulation layer 213 in this embodiment is applied to the cylindrical battery. By pre-coating the conductive layer 212 and the insulation layer 213, the edges of the first active material layer 214 and the insulation layer 213 may be made clear, effectively avoiding the generation of the fusion area between the two, facilitating the accurate identification of the edge of the first active material layer 214, ensuring the consistency of the electrode assembly 20, and greatly improving the yield rate. Furthermore, by setting the thickness m of the conductive layer 212 to be greater than or equal to the thickness n of the insulation layer 213, the edge where the insulation layer 213 is located may be effectively prevented from warping, thereby greatly improving the yield rate. At the same time, controlling the thickness of the insulation layer 213 and reducing the material consumption also effectively lower the production costs. Furthermore, by controlling the coating thickness of the insulation layer 213, the flexibility of the insulation layer 213 may be effectively improved. When the insulation layer 213 is coated widely, the tab of the first electrode 21 may still be bent normally. Furthermore, in the harsh environment, such as when the tab is inserted upside down, the tab of the first electrode 21 will also not be in direct contact with the second electrode 23.

The electrode assembly 20 is accommodated in the housing 30. The housing 30 includes a surrounding side wall 31 and an opening 32 formed at one end of the side wall 31. The housing 30 further includes a crimping portion 34, and the crimping portion 34 is formed at one end of the side wall 31 close to the opening 32 and recessed toward an interior of the housing 30. The secondary battery 1 further includes a cover 60, an insulative sealing member 70, and the aforementioned current collecting plate. The cover 60 is mounted on the opening 32. The insulative sealing member 70 is disposed around a periphery of the cover 60 to insulate and seal the cover 60 and the housing 30. The current collecting plate is disposed between the electrode assembly 20 and the cover 60 and is electrically connected to the housing 30. The connecting sheet of the current collecting plate is located on one side of the crimping portion 34 facing the electrode assembly 20 and is welded and connected to the crimping portion 34. In this way, by disposing the connecting sheet of the current collecting plate to be located on one side of the crimping portion 34 facing the electrode assembly 20 and being welded and connected to the crimping portion 34, that is, a welding area between the current collecting plate and the tab is located at a position closer to the electrode assembly 20 than the crimping portion 34, the crimping portion 34 may be prevented from affecting the welding area between the tab and the current collecting plate, thereby improving welding strength between the tab and the current collecting plate.

Furthermore, the housing 30 further includes an end wall 33. The side wall 31 is disposed around the end wall 33 and is located at one end of the side wall 31 away from the opening 32. The end wall 33 and the side wall 31 enclose the accommodating cavity in the housing 30 for accommodating the electrode assembly 20, an electrolyte, and other necessary components of the battery. The connection between the end wall 33 and the side wall 31 may be achieved in various ways, such as integral stamping, integral casting, or separate welding.

The secondary battery 1 further includes a pole post 90. The pole post 90 passes through the end wall 33 and is insulated from the end wall 33.

The current collecting plate includes a first current collecting plate 81 and a second current collecting plate 82. The first current collecting plate 81 is disposed between the electrode assembly 20 and the end wall 33, and the second current collecting plate 82 is disposed between the electrode assembly 20 and the cover 60. In this embodiment, the first current collecting plate 81 corresponds to a positive tab, and the positive tab is electrically connected to the pole post 90 through the first current collecting plate 81; the second current collecting plate 82 corresponds to a negative tab, and the negative tab is electrically connected to the housing 30 through the second current collecting plate 82. However, the disclosure is not limited thereto. In other embodiments, the first current collecting plate 81 may correspond to the negative tab, and the second current collecting plate 82 may correspond to the positive tab.

A preparation method of the secondary battery in this embodiment is as follows:

1. Preparation of a positive electrode: Lithium iron phosphate is used as a positive active material. The positive active material is mixed with polyvinylidene difluoride as a binder and small particles of conductive carbon black (hereinafter referred to as Super P) as a conductive agent in a weight ratio of 98:1:1, and N-methylpyrrolidone (NMP) is added to be stirred in a vacuum mixer until the whole mixture becomes uniform and transparent to obtain a positive slurry. The positive slurry is evenly coated on a positive current collector made of aluminum foil. The aluminum foil is dried at a room temperature and then transferred to an oven for drying. Then, the positive electrode is obtained by cold pressing and cutting.

2. Preparation of a negative electrode: Artificial graphite as a negative active material, Super P as the conductive agent, sodium carboxymethyl cellulose (CMC-Na) as a thickening agent, and styrene-butadiene rubber (SBR) as the binder are mixed in a mass ratio of 96:1:1:2, and deionized water is added to be stirred in the vacuum mixer to obtain a negative slurry. The negative slurry is evenly coated on a negative current collector made of copper foil. The copper foil is dried at the room temperature and then transferred to the oven for drying. Then, the negative electrode is obtained by cold pressing and cutting.

3. Preparation of an electrolyte: In an argon atmosphere glove box with a water content of <10 ppm, battery-grade (a purity level that meets battery performance requirements) ethylene carbonate (EC), propylene carbonate (PC), dimethyl carbonate (DMC), and ethyl acetate (EA) are mixed in a mass ratio of 1:1:2:6 to form an organic solvent. According to composition of the electrolyte described in the table below, other ingredients are quantitatively added and mixed evenly to obtain the electrolyte.

4. Preparation of a separator: A polypropylene film (PP) with a thickness of 12 $\mu$m is used as the separator. The positive electrode, separator, and negative electrode prepared above are stacked sequentially, so that the separator is located between the positive and negative electrodes to play a role of insulation. Then, it is wrapped with an aluminum-plastic film, transferred to the vacuum oven and dried at 120 °C, injected with 3.0 g/Ah of the electrolyte prepared above, and sealed for electrolyte formation. Finally, a pouch battery (i.e., a lithium-ion battery) with a capacity of 1 Ah is prepared.

As shown in FIG. 10, the disclosure further provides a battery pack 100, and the battery pack 100 includes the above secondary battery 1. In an embodiment of the battery pack 100 of the disclosure, the battery pack 100 includes a box body 310, a box cover 320, and multiple secondary batteries 1. The secondary batteries 1 are placed in the box body 310 and are connected in series or in parallel, or a mixture of series and parallel. The box cover 320 is sealed on the box body 310 to protect the secondary batteries 1. It should be noted that in addition to the secondary batteries 1 of the disclosure, the battery pack 100 may also include other parts such as a thermal management system and a circuit board of the battery pack 100. The battery pack 100 may be a battery module, a battery pack, an energy storage cabinet, etc., which will not be described one by one here.

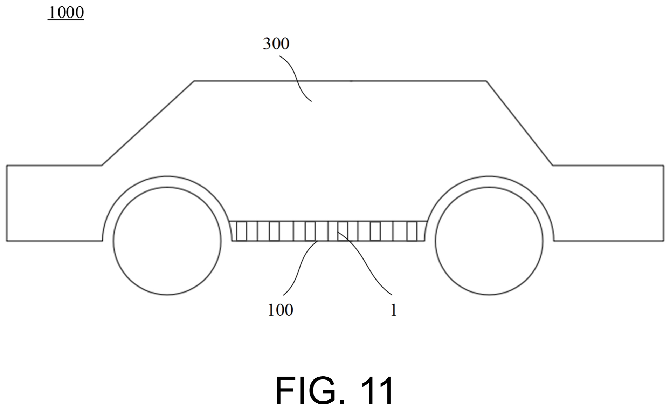

As shown in FIG. 11, the disclosure further provides an electronic device 1000, and the electronic device 1000 includes the above battery pack 100. A working portion 300 is electrically connected to the battery pack 100 to obtain electrical energy support. As an example, the electronic device 1000 is a vehicle. The vehicle may be a fuel vehicle, a gas vehicle, or a new energy vehicle, and the new energy vehicle may be a battery electric vehicle, a hybrid electric vehicle, or an extended range electric vehicle, but the disclosure is not limited thereto. The working portion 300 is a vehicle body, and the battery pack 100 is disposed at a bottom of the vehicle body and provides the electrical energy support for driving of the vehicle or operation of electric elements in the vehicle. However, in some other embodiments, the electronic device 1000 may further be a mobile phone, a portable device, a notebook computer, a ship, a spacecraft, an electric toy, an electric tool, etc. The spacecraft includes an aircraft, a rocket, a space shuttle, a spaceship, etc. The working portion 300 may be a unit component that may obtain the electrical energy of the battery pack 100 and perform corresponding work, such as a blade rotating unit of a fan, a dust-absorbing working unit of a vacuum cleaner. The electric toy includes a fixed or mobile electric toy, such as a game console, an electric car toy, an electric ship toy, and an electric aircraft toy. The electric tool includes a metal cutting electric tool, a grinding electric tool, an assembly electric tool, and a railway electric tool, such as an electric drill, an electric grinder, an electric wrench, an electric screwdriver, an electric hammer, an electric impact drill, a concrete vibrator, and an electric planer. The embodiment of the disclosure provides no special limitation to the electronic device 1000 described above.

**Claims**

1. A secondary battery (1), wherein the secondary battery (1) comprises:

   a housing (10, 30);
   an electrode assembly (20) accommodated in the housing (10, 30), wherein the electrode assembly (20) is formed by stacking a first electrode (21), a separator (22), and a second electrode (23), the first electrode (21) comprises a first current collector (211), a partial area of at least one surface of the first current collector (211) is covered with a conductive layer (212) and an insulation layer (213) along a preset direction, and the preset direction is a length direction or a width direction of the first current collector (211);
   the conductive layer (212) is covered with a first active material layer (214), the first active material layer (214) at least partially covers the insulation layer (213), and an orthographic projection of the insulation layer (213) in a thickness direction (T) of the first current collector (211) is at least partially located outside an outer periphery of the first active material layer (214);
   setting that a thickness of the conductive layer (212) is m, and a thickness of the insulation layer (213) is n, then $n \leq m$.

2. The secondary battery (1) according to claim 1, wherein $0.5 \ \mu m \leq m < 1 \ \mu m$.

3. The secondary battery (1) according to claim 2, wherein the insulation layer (213) comprises an inorganic insulating filler and a binder, and based on mass of the insulation layer (213), mass of the inorganic insulating filler accounts for 70% to 90%, and mass of the binder accounts for 10% to 30%;

   setting that a particle size corresponding to a volume percentage of cumulative particle size distribution of the inorganic insulating filler reaching 50% is D50, a relationship between D50 of the inorganic insulating filler and n satisfies: $2 \leq n \ /D50 \leq 5$; and/or
   setting that the particle size corresponding to the volume percentage of cumulative particle size distribution of the inorganic insulating filler reaching 90% is D90, D90 of the inorganic insulating filler is less than $0.8 \ \mu m$.

4. The secondary battery (1) according to claim 1, wherein along the preset direction, the insulation layer (213) comprises a first area (2131) not covered by the first active material layer (214) and a second area (2132) covered by the first active material layer (214), a width of the first area (2131) is w1, and a width of the second area (2132) is w2;
   wherein $3mm \leq w1+w2 \leq 20mm$, or

$$0.1 \leq w1/(w1+w2) \leq 1.$$

5. The secondary battery (1) according to claim 4, wherein along the preset direction, the first active material layer (214) comprises a straight area (2141) and a thinned area (2142) connected to each other, and a width of the thinned area (2142) is w3; wherein $0 < w2/w3 \leq 1.05$.

6. The secondary battery (1) according to claim 1, wherein along the preset direction, a minimum spacing between the insulation layer (213) and the conductive layer (212) is w4, wherein $0 \leq w4 \leq 1$ mm.

7. The secondary battery (1) according to any one of claims 1-6, wherein the first electrode (21) is a positive electrode, and the first active material layer (214) comprises lithium iron phosphate; and/or

   the secondary battery (1) further comprises a cover assembly (40), the cover assembly (40) is disposed on the housing (10, 30) and defines an accommodating cavity (13) together with the housing (10, 30), and the electrode assembly (20) is accommodated in the accommodating cavity (13); and/or
   the secondary battery (1) is a prismatic battery; and/or the electrode assembly (20) is a wound electrode assembly (20).

8. The secondary battery (1) according to any one of claims 1-6, wherein

   the housing (30) comprises a surrounding side wall (31) and an opening (32) formed at one end of the side wall (31); the housing (30) further comprises a crimping portion (34), and the crimping portion (34) is formed at one end of the side wall (31) close to the opening (32) and recessed toward an interior of the housing (30); the secondary battery (1) further comprises:

   a cover (60) mounted on the opening (32); an insulative sealing member (70), wherein the insulative sealing member (70) is disposed around a periphery of the cover (60) to insulate and seal the cover (60) and the housing (30); a current collecting plate (82) disposed between the electrode assembly (20) and the cover (60) and electrically connected to the housing (30), wherein a connecting sheet of the current collecting plate (82) is located on one side of the crimping portion (34) facing the electrode assembly (20) and is welded and connected to the crimping portion (34); and/or

   the secondary battery (1) is a cylindrical battery.

9. A battery pack (100), comprising the secondary battery (1) according to any one of claims 1-8.

10. An electronic device (1000), comprising the battery pack (100) according to claim 9.

FIG. 1

FIG. 2

FIG. 3

FIG. 4

FIG. 5

FIG. 6

FIG. 7

FIG. 8

FIG. 9

FIG. 10

1000

300

100    1

# FIG. 11

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 118 399 031 A (GUANGZHOU NANUO NEW MATERIAL TECH CO LTD) 26 July 2024 (2024-07-26) * claims 1-13; figures 1-5; examples 1-7; tables 1-2 * ----- | 1-10 | INV. H01M4/58 H01M10/04 H01M10/052 H01M10/0587 H01M50/107 |
| A | US 2020/144605 A1 (SU XINRU [CN] ET AL) 7 May 2020 (2020-05-07) * claims 1-20; figures 1-4 * ----- | 1-10 | |
| A | US 2022/376265 A1 (ZHANG SHUANGHU [CN] ET AL) 24 November 2022 (2022-11-24) * claims 1-20; figures 1-4 * ----- | 1-10 | |
| A | EP 3 926 753 A1 (CONTEMPORARY AMPEREX TECHNOLOGY CO LTD [CN]) 22 December 2021 (2021-12-22) * claims 1-20; figures 1-15 * ----- | 1-10 | |

TECHNICAL FIELDS
SEARCHED        (IPC)

H01M

The present search report has been drawn up for all claims

| Place of search | Date of completion of the search | Examiner |
|---|---|---|
| Munich | 20 April 2026 | Liu, Yonghe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 21 6956

20-04-2026

| Patent document cited in search report | | Publication date | Patent family member(s) | | Publication date |
|---|---|---|---|---|---|
| CN 118399031 | A | 26-07-2024 | NONE | | |
| US 2020144605 | A1 | 07-05-2020 | CN | 109244362 A | 18-01-2019 |
| | | | CN | 117374218 A | 09-01-2024 |
| | | | EP | 3648204 A1 | 06-05-2020 |
| | | | EP | 4683032 A2 | 21-01-2026 |
| | | | US | 2020144605 A1 | 07-05-2020 |
| | | | US | 2021135206 A1 | 06-05-2021 |
| US 2022376265 | A1 | 24-11-2022 | CN | 115066767 A | 16-09-2022 |
| | | | EP | 4086982 A1 | 09-11-2022 |
| | | | US | 2022376265 A1 | 24-11-2022 |
| EP 3926753 | A1 | 22-12-2021 | CN | 111326699 A | 23-06-2020 |
| | | | CN | 216698661 U | 07-06-2022 |
| | | | EP | 3926753 A1 | 22-12-2021 |
| | | | US | 2022123444 A1 | 21-04-2022 |
| | | | US | 20260024889 A1 | 22-01-2026 |
| | | | WO | 2021027492 A1 | 18-02-2021 |

EPO FORM P0459